# EUROPEAN PATENT APPLICATION

(11) **EP 1 274 088 A2**
(43) Date of publication of application: **08.01.2003**
(21) Application number: 02090226.8
(22) Date of filing: 28.06.2002
(51) Int. Cl.: G11B 27/32, G11B 27/11, H04N 5/782, H04N 7/14

(54) **Recording system for digital broadcasting**

(30) Priority: 29.06.2001 JP 2001199646
(71) Applicant: NEC CORPORATION, Tokyo (JP)
(72) Inventor: Honmura, Hiroshi, NEC Corporation, Tokyo (JP)
(74) Representative: Patentanwälte Wenzel & Kalkoff

(57) **Abstract**

In a recording system for digital broadcasting are provided a log data generation unit (8) for generating log data (a log) based on information about TS packets outputted from a packet separation unit (2), a data filter unit (4) and a data search unit (5). The log is comprised of, for example, the first to fourth 4-byte words. The log is generated with respect to each TS packet that has passed through the packet separation unit (2) and temporarily stored in a register within the log data generation unit (8). Thereafter, when the content of the stored log satisfies previously determined conditions, the log data generation unit (8) outputs the log to a memory access unit (control unit) (6).

## Description

### BACKGROUND OF THE INVENTION

### Technical Field of the Invention

The present invention relates to a recording system for digital broadcasting, which is employed to record data in conjunction with digital broadcasting such as satellite broadcasting, and more particularly to a recording system for digital broadcasting in which a recorded broadcast program can easily be searched.

### Description of the Related Art

In recent years, MPEG (Motion Picture Coding Experts Group ) 2 standard has been widely employed to perform compression of video data such as in a broadcast system utilizing multi-channel digital signals and DVD. Two kinds of streams, i.e., a Transport Stream (TS) and a Program Stream (PS), are defined as a signal carrying a plurality of multiplexed contents such as video data and audio data. Particularly in digital broadcasting the transport stream is used. The transport stream is comprised of sequential packets each referred to as a TS packet.

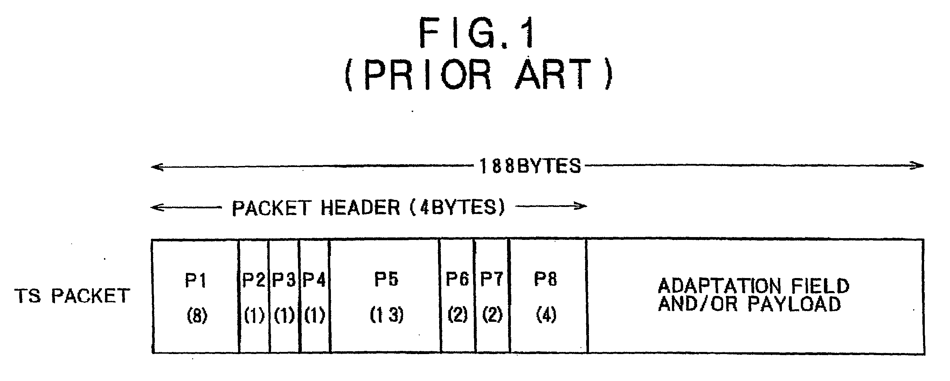

FIG. 1 illustrates the content of the TS packet. One TS packet comprises a 4-byte packet header disposed in the head portion thereof and a 184-byte adaptation field and/or payload disposed in the next portion of the adaptation field. That is, the number of bytes occupied by the TS packet is 188.

The packet header comprises a 8-bit synchronous byte P1, a one-bit transport error indicator P2, a one-bit payload unit start indicator P3, a one-bit transport priority P4, a 13-bit packet ID (PID) P5, a 2-bit transport scrambling control P6, a 2-bit adaptation field control P7 and a 4-bit continuity counter P8. Note that numerals within parentheses in FIG. 1 each indicate the number of bits occupied by the above-described data area.

In addition, in a case where the adaptation field control is "01", the portion of the remaining 184-byte of the TS packet is comprised only of the payload and in a case where the adaptation field control is "10", the portion is comprised only of the adaptation field, and in a case where the adaptation field control is "11"', the portion is comprised of the adaptation field and the payload.

The adaptation field includes a one-bit discontinuity indicator, a one-bit random access indicator, a one-bit elementary stream priority indicator, one-bit Program Clock Reference flag (PCR flag), a one-bit Original Program Clock Reference flag (OPCR flag), a one-bit splicing point flag, a one-bit transport private data flag and a one-bit adaptation field extension flag.

In the payload is disposed a Packetized Elementary Stream (PES) constructed based on a signal referred to as an Elementary Stream (ES) which constitutes video data and the like, or a section data described in the following .

The payload of a TS packet is to be reproduced together with the payload included in one of the other TS packets and in this case, information or the like indicating which TS packet out of the other TS packets should be selected is referred to as a Program Specific Information (PSI) and transmitted in a data structure referred to as a section.

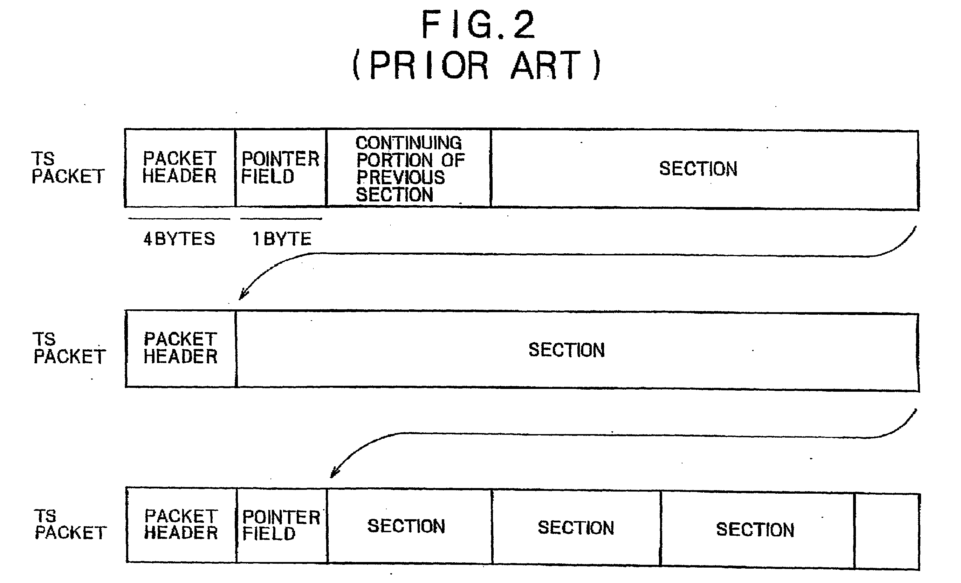

FIG. 2 illustrates the content of a TS packet carrying a section. A section is disposed in a payload of a TS packet. In more detail, one section is disposed over a plurality of TS packets in some cases and a plurality of sections are disposed in one TS packet in some other cases. Additionally, in a case where an origin of a section is included in a TS packet and further, the section is the first one out of one or more sections disposed in a payload of the TS packet, a payload_unit_start_indicator P3 constituting a packet header of the TS packet is made to be "1" and a first one byte (8-bit) of the payload is assigned as a pointer field.

The detailed description of MPEG 2 is disclosed e.g. in "ISO/IEC 13818-1:1994 (E)", "ISO/IEC 13818-2:1995 (E)", and "Essentials of video and audio compression techniques (published by CQ publisher)".

Recently, data such as video and audio data compressed based on the MPEG-2 standard and subsequently transmitted has been required to be recorded in a recording media such as a Hard Disk Drive (HDD).

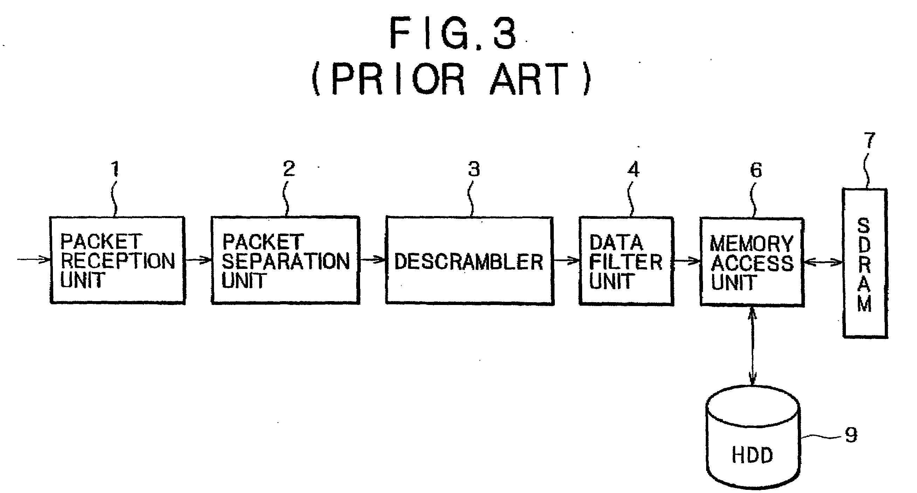

Fig. 3 is a block diagram illustrating a conventional recording system for digital broadcasting in which data in a packet unit is recorded in an HDD.

The conventional recording system for digital broadcasting includes, for example, a packet reception unit 1 for receiving a TS packet transmitted as radio wave and a packet separation unit 2 for extracting a necessary TS packet from TS packets outputted from the packet reception unit 1 in accordance with a PID included in each of the TS packets. The packet reception unit 1 is, for example, an interface for input. To the packet reception unit 1 are inputted, for example, 2-channel transport streams and in each of the transport streams is included, for example, data making up five broadcast programs. In the packet separation unit 2, operation for extracting a TS packet is performed by a command from a Central Processing Unit (CPU: not shown), which command is, for example, based on selection of broadcast program by a user. That is, to the packet separation unit 2 is inputted data in a packet unit, which data makes up ten broadcast programs, and the packet separation unit 2 extracts TS packets based on a PID from the data, which TS packets make up a first broadcast program.

The data to be received is encrypted if needed. Accordingly, in the recording system for digital broadcasting is provided a descrambler 3 for cracking and reconstructing the code included in data outputted in a packet unit from the packet separation unit 2.

Furthermore, as described above, for example, when the TS packets making up the first broadcast program are extracted from the TS packets based on selection of broadcast program by a user in the packet separation unit 2, the extracted TS packets necessary for the first broadcast program include, for example, the following TS packets: a TS packet containing video data in a payload; a TS packet containing audio data in a payload; a TS packet containing data for an Electronic Program Guide (EPG) in a payload; and a TS packet containing data for menu screen in a payload. However, the payload data includes many items other than the data that a user needs at that point. Therefore, in the recording system for digital broadcasting is provided a data filter unit 4 for extracting the necessary TS packet based on the content of a payload included in each TS packet from the TS packets outputted from the descrambler 3 and then, outputting the extracted packet.

Additionally, in the recording system for digital broadcasting are provided a Synchronous Dynamic Random Access Memory (SDRAM) 7 and an HDD as storage unit and a recording medium, respectively, and further, a memory access unit 6 for converting the TS packet outputted from the data filter unit 4 to a protocol associated with the SDRAM 7. The memory access unit 6 is connected to the HDD 9 via, for example, an Integrated Device Electronics (IDE) interface and configured to write the data accumulated in the SDRAM 7 on the HDD 9.

The recording system for digital broadcasting constructed as described above allows the HDD 9 to record the broadcast program selected by a user.

However, in the conventional recording system for digital broadcasting, when the data included in a specific TS packet out of the data recorded in the HDD 9 is going to be accessed, the TS packets recorded in the HDD have to be searched in order starting from the TS packet located at the head position of the recorded TS packets. Accordingly, the time necessary for operation of the search becomes longer, In addition, since the CPU cannot perform other operations during the operation of the search, the recording system for digital broadcasting cannot operate with high efficiency.

Moreover, when data such as video data and audio data recorded in the HDD 9 is going to be reproduced, at first, the time interval at which the TS packets are received is made coinciding with the time interval at which the TS packets are reproduced, and then, the data rate at the time of reproduction of packet has to be made coinciding with the data rate at the time of reception of packet. However, in the above-described construction of recording system for digital broadcasting, since only the TS packet data associated with the broadcast program selected by a user is recorded in the HDD 9, when the TS packet data is reproduced without any modification, the data is reproduced skipping the data corresponding to the removed packets so that the reproduced data substantially appears like fast-forwarded data. Therefore, in order to reproduce the data normally, the TS packets other than the TS packets associated with the selected broadcast program also are required to be recorded in the HDD 9. This requirement makes the occupied capacity of the HDD 9 large in quantity.

### SUMMARY OF THE INVENTION

An object of the present invention is to provide a recording system for digital broadcasting in which the burden on a CPU included therein can be reduced when a packet is searched.

A recording system for digital broadcasting according to the present invention comprises a recording medium for recording a digital signal transmitted in a packet unit by digital broadcasting and a log data generation unit for generating log data containing previously specified bits out of a plurality of bits that make up the digital signal in a packet unit.

As described above, according to the present invention, allocating specific bits included in log data to indicate the feature of packets necessary for specific reproduction such as reproduction in a fast-forward mode makes it possible to search the packets necessary for specific reproduction by only searching the log data and without searching a desired packet itself. Furthermore, although a TS packet in a transport stream consists of 188-bytes, the log data may be configured to only include such specific bits and therefore, small size log data can be available. Accordingly, the burden on a CPU during search operation can be reduced and as a result, the CPU can operate while performing other processing, thereby allowing the entire system to operate with higher efficiency.

It should be noted that making the log data contain data indicative of a time when the log data has been generated allows for search of a time when the log data has been generated with respect to each packet. As a result, a desired broadcast program can be searched in an extremely easy manner. Furthermore, by performing reproduction referring to the time as to generation of the log data, the reproduction rate can be made coinciding with the input rate. Accordingly, it is no more required to record packets other than the packets associated with a selected broadcast program in the recording medium, thereby improving the usability of capacity of the recording medium.

In addition, the recording system for digital broadcasting constructed in accordance with the present invention further comprises a storage unit for storing the digital signal and the log data in a packet unit, and a control unit for making the recording medium record the digital signal stored in the storage unit. This construction of recording system makes it possible to temporarily accumulate the digital signal in the storage unit and then, record the digital signal in the recording medium. As described above, since the storage unit is used as a buffer for forwarding the digital signal, operation for recording the signal in the recording medium can be performed adjusting the recording rate or the like.

Moreover, the recording system for digital broadcasting constructed in accordance with the present invention is further constructed such that the storage unit is at least partitioned into a first section for storing the digital signal and a second section for storing the log data. This construction of recording system makes it possible to further easily and quickly search the log data.

Still furthermore, the recording system for digital broadcasting constructed in accordance with the present invention is further constructed such that the log data generation unit outputs the log data to the outside only in the event the log data satisfies previously determined conditions, thereby preventing log data associated with packets unnecessary for specific reproduction or the like from being accumulated in the storage unit.

Additionally, the recording system for digital broadcasting constructed in accordance with the present invention is further constructed such that the control unit is able to add data indicative of the order of a packet corresponding to the log data to the log data, the order being counted since the control unit has begun recording packets.

Moreover, the recording system for digital broadcasting constructed in accordance with the present invention further may comprise:
a first filter for selectively extracting one or more packets associated with a broadcast program from a plurality of broadcast programs included in the digital signal while supplying bits necessary for generating the log data to the log data generation unit;
a second filter for extracting packets satisfying predetermined conditions from packets having passed through the first filter while supplying bits necessary for generating the log data to the log data generation unit; and
a data search unit for supplying bits necessary for generating the log data to the log data generation unit after inspecting contents of packets having passed through the second filter,
in which only the packets having passed through the second filter are recorded in the recording medium.

Still furthermore, the recording system for digital broadcasting constructed in accordance with the present invention is further constructed such that bits supplied from the data search unit to the log data generation unit contain at least one kind of bit selected from a group of bits consisting of, for example, a bit indicative of inclusion of I-picture, a bit indicative of inclusion of P-picture and a bit indicative of B-picture.

Furthermore, the recording system for digital broadcasting according to the present invention may be constructed such that the log data contains at least one kind of bit selected from a group of bits consisting of: a bit indicative of a value of PID included in a transport stream packet, the value being specified by MPEG-2 standard; a bit indicating the transport stream packet having been modified; and a bit indicative of a channel of a digital signal. Still furthermore, it may be constructed such that the log data contains: a bit indicative of a state of "payload_unit_start_indicator" included in a packet header of a transport stream packet and specified by MPEG-2 standard; a bit indicating a state of change of a bit indicative of a state of "transport_scrambling_control" included in the packet header; and at least one kind of bit selected from a group of bits consisting of: a bit indicative of a state of "discontinuity_indicator"; a bit indicative of a state of "random_access_indicator"; a bit indicative of a state of "elementary_stream_priority_indicator"; a bit indicative of a state of "PCR_flag"; a bit indicative of a state of "OPCR_flag"; a bit indicative of a state of "splicing_point_flag"; a bit indicative of a state of "transport_private_data_flag"; and a bit indicative of a state of "adaptation_field_extension_flag". Yet still furthermore, it may be constructed such that the log data contains at least one kind of bit selected from a group of bits consisting of: a bit indicative of a state of "PSC"; a bit indicative of a state of "Sequence_header_code"; a bit indicative of a state of "Group_start_code", all of the bits described above being included in start code values specified by MPEG-2 standard; and a bit having another start code value. Or, it may be constructed such that the log data contains a bit indicating that the log data is data generated at constant time intervals.

### BRIEF DESCRIPTION OF THE DRAWINGS

FIG. 1 illustrates a schematic view of the content of a TS packet;
FIG. 2 illustrates a schematic view of the content of a TS packet carrying a section;
FIG. 3 is a block diagram illustrating a conventional recording system for digital broadcasting, in which data in a packet unit is recorded in an HDD; and
FIG. 4 is a block diagram illustrating a recording system for digital broadcasting constructed in accordance with an embodiment of the present invention.

### DETAILED DESCRIPTION OF THE PREFERRED EMBODIMENTS

A recording system for digital broadcasting constructed in accordance with an embodiment of the present invention will be explained in detail below with reference to the accompanying drawings.

In consideration of the above-described problems found in the conventional recording system for digital broadcasting, the inventors of this application conceived the present invention as a result of repeated studies and experiments. That is, a log with respect to a TS packet satisfying the previously defined conditions is created and the log is stored in a specific area, thereby allowing search of a specified TS packet to be performed at high rate and further, preventing recording of the data of TS packets other than the data of TS packets associated with the selected broadcast program.

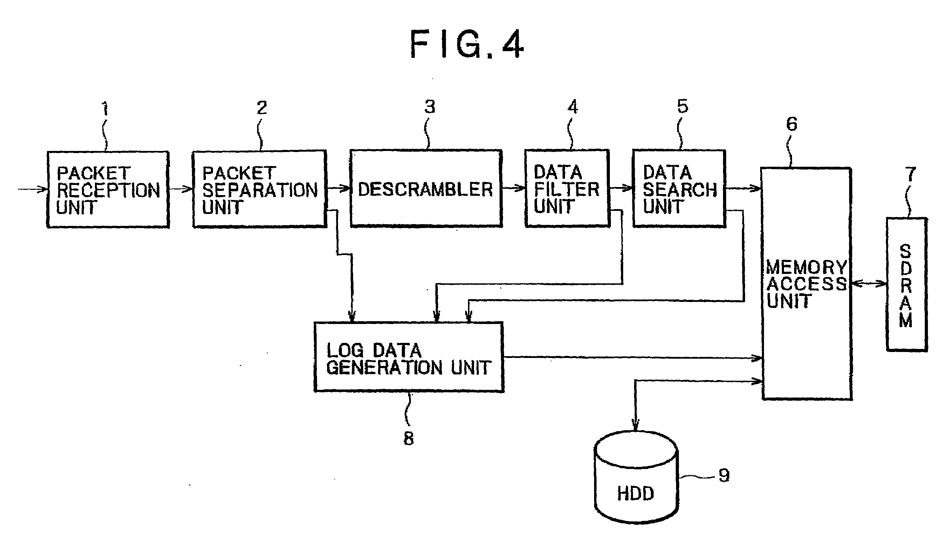

FIG. 4 is a block diagram illustrating the recording system for digital broadcasting constructed in accordance with the embodiment of the present invention. In the embodiment, in a stage subsequent to a data filter unit (second filter) 4 is provided a data search unit (data search unit) 5 for inspecting what kind of contents are contained in data that is included in a TS packet outputted from the data filter unit 4.

A packet separation unit (first filter) 2 in the embodiment is constructed such that a TS packet is extracted by a command from a CPU and in addition, predetermined information about the extracted TS packet is read out and then, outputted. The predetermined information read out by the packet separation unit 2 will be shown as an example in the following tables 1 and 2.

**[Table 1]**

| Algebraic sign | Number of bits |
|---|---|
| PID Value | 13 |
| AV_PID | 1 |
| TTSD_PID | 1 |
| SR_PID | 1 |
| Packet_Replace | 1 |
| Packet_Insert | 1 |
| Packet_Edit | 1 |
| CH A/B | 1 |

**[Table 2]**

| Algebraic sign | Number of bits |
|---|---|
| payload_unit_start_indicator | 1 |
| transport_stream_switch_to_clear | 1 |
| transport_stream_switch_to_even | 1 |
| transport_stream_switch_to_odd | 1 |
| discontinuity_indicator | 1 |
| radom_access_indicator | 1 |
| elementary_stream_priority_indicator | 1 |
| PCR_flag | 1 |
| OPCR_flag | 1 |
| splicing_point_flag | 1 |
| transport_private_data_flag | 1 |
| adaptation_field_extension_flag | 1 |

An algebraic sign "PID Value" in table 1 indicates a PID of the TS packet.

An algebraic sign "AV_PID" in table 1 indicates whether or not the PID belongs to a TS packet that includes video data or audio data. Within the MPEG-2 standard, a PID of a TS packet that includes AV (Audio or Video) data is defined to have a specific value and when a PID is set at the specific value, in other words, includes audio or video data, the "AV_PID" becomes "1."

An algebraic sign "TTSD_PID" in table 1 indicates whether or not the PID belongs to a TS packet that is to be filtered in the data filter unit 4 and in a case where the TS packet is filtered, the "TTSD_PID" becomes "1."

An algebraic sign "SR_PID" in the table 1 indicates whether or not the PID belongs to a TS packet that is to be recorded in the HDD 9 and when the TS packet is recorded in the HDD 9, the "SR_PID" becomes "1." Accordingly, the information indicative of "SR_PID" is normally set at "1."

An algebraic sign "packet_Replace" in table 1 indicates whether or not the TS packet is a TS packet that has been replaced. The TS packet is replaced by a null packet (invalid packet) if needed. When such replacement of the TS packet has been performed, the "Packet_Replace" becomes "1." Note that the TS packet received by the packet reception unit 1 appropriately includes a null packet provided for time adjustment and the like.

An algebraic sign "Packet_Insert" in table 1 indicates whether or not the TS packet is a TS packet that is to be followed by insertion of another TS packet such as a null packet and when the other TS packet is inserted, the "Packet_Insert" becomes "1."

An algebraic sign "Packet_Edit" in table 1 indicates whether or not the TS packet is a TS packet that has been edited out. For example, when information included in the TS packet is to be masked, in some cases, all of the bytes after a specific byte including the headmost byte within the TS packet are marked out with some patterns instead of replacement of the TS packet. When such operation for editing a TS packet has been performed, the "Packet_Edit" becomes "1." That is, those algebraic signs, "Packet_Replace," "Packet_Insert" and "Packet_Edit," indicate that the TS packet including those algebraic signs has been modified.

An algebraic sign "CH A/B" in table 1 indicates to which channel out of two channels received by the packet reception unit 1 the TS packet belongs.

It should be noted that operation for replacing, inserting or editing a TS packet is performed based on a command from the CPU.

An algebraic sign "payload_unit_start_indicator" in table 2 indicates payload_unit_start_indicator included in a packet header of the TS packet.

An algebraic sign "transport_stream_switch_to_clear" in table 2 becomes "1" when 2-bit transport_scrambling_control included in the packet header changes to "00" within the TS packet. When two-bit transport_scrambling_control value has changed to "00," the associated TS packet is descrambled.

An algebraic sign "transport_stream_switch_to_even" in table 2 becomes "1" when transport_scrambling_control value changes to "10" within the associated TS packet.

An algebraic sign "transport_stream_switch_to_odd" in table 2 becomes "1" when transport_scrambling_control value changes to "11" within the associated TS packet. That is, those algebraic signs,
"transport_stream_switch_to_clear,"
"transport_stream_switch_to_even" and
"transport_stream_switch_to_odd," indicate a state of change of transport_scrambling_control.

An algebraic sign "discontinuity_indicator" in table 2 indicates discontinuity_indicator included in an adaptation field of the associated TS packet.

An algebraic sign "radom_access_indicator" in table 2 indicates radom_access_indicator included in an adaptation field of the associated TS packet.

An algebraic sign "elementary_stream_priority_indicator" in table 2 indicates elementary_stream_priority_indicator included in an adaptation field of the associated TS packet.

An algebraic sign "PCR_flag" in table 2 indicates PCR_flag included in an adaptation field of the associated TS packet.

An algebraic sign "OPCR_flag'' in table 2 indicates OPCR_flag included in an adaptation field of the associated TS packet.

An algebraic sign "splicing_point_flag" in table 2 indicates splicing_point_flag included in an adaptation field of the associated TS packet.

An algebraic sign "transport_private_data_flag" in table 2 indicates transport_private_data_flag included in an adaptation field of the associated TS packet.

An algebraic sign "adaptation_field_extension_flag" in table 2 indicates adaptation_field_extension_flag included in an adaptation field of the associated TS packet.

The data filter unit 4 in the embodiment is constructed such that the data filter unit is able to extract a TS packet based on the content of a payload, as well as read out predetermined information about the extracted TS packet to output the same. The predetermined information read out by the data filter unit 4 will be shown as an example in the following table 3.

**[Table 3]**

| Algebraic sign | Number of bits |
|---|---|
| Section_match | 1 |
| Filter_Pass | 1 |
| Section_complete | 1 |
| Section_start | 1 |
| Section_end | 1 |

An algebraic sign "Section_match" in table 3 indicates whether or not a Section normally terminates within a TS packet that includes the end point of the Section in a case where the Section is provided over a plurality of TS packets, and when the Section normally terminates, the "Section_match" becomes "1." Note that Cyclic Redundancy Check (CRC) is performed in the data filter unit 4 and when the "Section_match" is "1," result of the CRC performed with respect to data included in the associated TS packet is decided normal,

An algebraic sign ''Filter_Pass" in table 3 indicates whether or not 16-bytes of data beginning at the head location within a TS packet have passed through the data filter unit 4 regardless of the result of CRC, and when the 16-bytes of data have passed therethrough, the "Filter_Pass" becomes "1."

An algebraic sign "Section_complete" in table 3 indicates whether or not at least one Section that has passed through the CRC is included in the associated TS packet, and when the at least one Section is included therein, the "Section_complete" becomes "1."

An algebraic sign "Section_start" in table 3 indicates that a TS packet includes a Section provided over other TS packets after the TS packet and whether or not the start point of the Section is included in the TS packet, and when the start point is included therein, the "Section_start" becomes "1."

An algebraic sign "Section_end" in table 3 indicates that a TS packet includes a Section provided over other TS packets before the TS packet and whether or not the end point of the Section is included in the TS packet, and when the end point is included therein, the "Section_end" becomes "1."

Furthermore, the data search unit 5 is constructed such that the data search unit inspects a TS packet outputted from the data filter unit 4 as to what kind of content the data included in the TS packet contains therein and then, reads out predetermined information about the inspected TS packet to output the same. The predetermined information read out by the data search unit 5 will be shown as an example in the following table 4.

**[Table 4]**

| Algebraic sign | Number of bits |
|---|---|
| PSC | 1 |
| CODE1 | 1 |
| CODE2 | 1 |
| CODE3 | 1 |
| CODE4 | 1 |
| CODE5 | 1 |
| CODES | 1 |
| Sequence_header_code | 1 |
| I-picture | 1 |
| P-picture | 1 |
| B-picture | 1 |
| Group_start_code | 1 |

An algebraic sign "PSC" in table 4 indicates whether or not a TS packet is a first TS packet out of one or more TS packets including an I-picture therein within one Group Of Picture (GOP), and when the TS packet is positioned at the head location of the TS packets, the "PSC" becomes "1."

Any one of algebraic signs "CODE1" to "CODE6" in table 4 is determined based on conditions that can freely be determined by a user. For example, codes such as an extension start code and a sequential end code in a sequence layer, and a slice start code in a slice layer, all codes constituting a packet, are assigned as bits that constitute "CODE1" to "CODE6."

An algebraic sign "Sequence_header_code" in table 4 indicates whether or not a new video is to be started from the TS packet, and when the new video is started, the "Sequence_header_code" becomes "1."

An algebraic sign "I-picture" in table 4 indicates whether or not I-picture is included in the TS packet, and when the I-picture is included therein, the "I-picture" becomes "1." Since the I-picture is a coded image within a frame, which is coded only in accordance with information within the frame, an amount of the data included in the I-picture is large. In addition, since the I-picture does not contain difference information between an associated frame and other frames, which difference information is contained in B-picture and P-picture, accident errors due to the difference information are never accumulated in the I-picture.

An algebraic sign "P-picture" in table 4 indicates whether or not P-picture is included in the TS packet, and when the P-picture is included therein, the "P-picture" becomes "1." Since the P-picture is a coded image as a prediction image for motion compensation processing, which basically uses a past frame as a prediction signal for motion compensation processing, an amount of data included in the P-picture is smaller than that included in the I-picture.

An algebraic sign "B-picture" in table 4 indicates whether or not B-picture is included in the TS packet, and when the B-picture is included therein, the "B-picture" becomes "1." Since the B-picture is a coded image as a bi-directional prediction image for motion compensation processing, which uses both a past frame and a future frame as a prediction signal for motion compensation processing, an amount of data included in the B-picture is smaller than at included respectively in the I-picture and the P-picture.

An algebraic sign "Group_start_code" in table 4 indicates whether or not the head of a GOP is included in the TS packet, and when the head is included therein, the "Group_start_code" becomes "1." Those algebraic signs, "PSC," "Sequence_header_code" and "Group_start_code," indicate bits contained in Start code values defined by "ISO/IEC 13818-2: 1995 (E)."

Additionally, in the recording system for digital broadcasting constructed in accordance with the embodiment is provided a log data generation unit (log data generation unit) 8 for generating log data (hereinafter, referred to as a log) based on information about the TS packet outputted from the above-described packet separation unit 2, the data filter unit 4 and the data search unit 5. The log is made up of, for example, first to fourth 4-byte (32-bit) words. The log is generated with respect to each TS packet having passed through the packet separation unit 2 and temporarily stored in a register within the log data generation unit 8. Thereafter, when the content of the log satisfies previously defined conditions, the log data generation unit 8 outputs the log to a memory access unit (control unit) 6.

Contents of the first to fourth 4-byte words will be shown in the following tables 5 to 8. Note that "b0" listed in tables 5 to 8 represents the least significant bit (LSB) of the word, "b31" represents the most significant bit (MSB) of the word and "b1" to "b31" each between them represent a bit of the word in increasing order of the corresponding number. Furthermore, a numeral denoted in a column "supply source" in table 5 indicates a corresponding symbol shown in FIG. 4 and associated with a component that constitutes the recording system and supplies the corresponding bit. That is, the supply source "2" indicates that the corresponding bit is supplied by the packet separation unit 2 and the supply source "4" indicates that the corresponding bit is supplied by the data filter unit 4, and the supply source "5" indicates that the corresponding bit is supplied by the data search unit 5. In addition, the supply source "8" indicates that the corresponding bit is generated by the log data generation unit 8 itself and the supply source "6" indicates that the corresponding bit is not written into the log in the log data generation unit 8 but is written in the memory access unit 6.

**[Table 5]**

| Bit | Content of bit | Supply source |
|---|---|---|
| B0-b31 | Data indicative of order of the TS packet counted starting from a TS packet located at the head position of TS packets (Packet Count). | 6 |

**[Table 6]**

| Bit | Content of bit | Supply source |
|---|---|---|
| B0-b12 | PID Value | 2 |
| b13 | Suspended | - |
| b14 | AV_PID | 2 |
| b15 | PID_EVENT | 8 |
| b16 | TTSD_PID | 2 |
| b17 | SR_PID | 2 |
| b18 | Packet_Replace | 2 |
| b19 | Packet_Insert | 2 |
| b20 | Packet_Edit | 2 |
| b21 | Section_match | 4 |
| b22 | First_Packet/Internal_Tick | 6/8 |
| b23 | CH A/B | 2 |
| b24-b31 | Suspended | - |

**[Table 7]**

| Bit | Content of bit | Supply source |
|---|---|---|
| b0 | payload_unit_start_indicator | 2 |
| b1 | transport_stream_switch_to_clear | 2 |
| b2 | transport_stream_switch_to_even | 2 |
| b3 | transport_stream_switch_to_odd | 2 |
| b4 | Filter_Pass | 4 |
| b5 | Section_complete | 4 |
| b6 | Section_start | 4 |
| b7 | Section_end | 4 |
| b8 | discontinuity_indicator | 2 |
| b9 | random_access_indicator | 2 |
| b10 | elementary_stream_priority_indicator | 2 |
| b11 | PCR_flag | 2 |
| b12 | OPCR_flag | 2 |
| b13 | splicing_point_flag | 2 |
| b14 | transport_private_data_flag | 2 |
| b15 | adaptation_field_extension_flag | 2 |
| b16 | PSC | 5 |
| b17-b22 | CODE1 - CODE6 | 5 |
| b23 | Suspended | 5 |
| b24 | Sequence_header_code | 5 |
| b25 | I-picture | 5 |
| b26 | P-picture | 5 |
| b27 | B-picture | 5 |
| b28 | Group_start_code | 5 |
| b29-b31 | Suspended | - |

**[Table 8]**

| Bit | Content of bit | Supply source |
|---|---|---|
| b0 - b31 | Record time (Record Time Stamp) | 8 |

By referring to the first 4-byte word, the position of the TS packet with respect to an amount of data corresponding to the time span of 36 hours can be specified.

"PID_EVENT" is the content of the 16th bit (b15) counted starting from the least significant bit in increasing order of the corresponding number within the second 4-byte word and indicates whether or not the TS packet previously contains a PID indicating that a TS packet is subjected to log generation, and when the TS packet contains such FID, the "PID_EVENT" becomes "1."

"Internal_Tick" represents the content of the 23rd bit (b22) counted starting from the least significant bit in increasing order of the corresponding number within the second 4-byte word and is made "1" at predetermined intervals, for example, every 90 ms, in the log data generation unit 8. Such an operation of the recording system makes it possible to output a log to the memory access unit 6 at least at the above-described intervals even in a case where TS packets, which do not satisfy all other conditions necessary for outputting a log to the memory access unit 6, are sequentially disposed. Furthermore, "First_Packet" also represents the content of the same 23rd bit and in a case where the TS packet is a TS packet that is first recorded among the TS packets, the "First_Packet" is made "1" in the memory access unit 6.

Furthermore, the fourth 4-byte word is provided to indicate a time when data has been recorded, in more detail, a time when an associated log has been generated in the log data generation unit 8. Note that in a case where a time to be recorded is counted up at a frequency of 27 MHz, since the low-order 9-bits of the word change at extremely short intervals and substantially without dedicating themselves to counting a time, a time to be recorded can be expressed using high-order 23 bits of the word while ignoring those low-order bits. Even in this case, since the least significant bit among the high-order 23 bits of the word is. counted up at a frequency of 90 kHz, in other words, at intervals of about 10 µsec, the operation of reproduction is performed substantially without time distortion.

Operation of the above-described recording system for digital broadcasting constructed in accordance with the embodiment will be explained below.

When TS packets are transmitted, the packet reception unit 1 receives all of the transmitted TS packets and then, outputs them to the packet separation unit 2. In accordance with the operation similar to that explained in the description of the conventional recording system for digital broadcasting, the packet separation unit 2 extracts predetermined packets from the transmitted TS packets and then, outputs the extracted TS packets to the descrambler 3 while supplying information about the extracted TS packet, which information is indicated in tables 1 and 2, to the log data generation unit 8. The descrambler 3 descrambles the TS packets outputted from the packet separation unit 2 based on a previously given descrambling key and then, restores data. The data filter unit 4 extracts necessary TS packets with respect to the restored data based on the content of payload and outputs the extracted TS packets to the data search unit 5 while supplying information about the extracted TS packets, which information is indicated in table 3, to the log data generation unit 8. The data search unit 5 inspects the contents of the TS packets outputted from the data filter unit 4 and then, outputs each of the TS packets to the memory access unit 6 while supplying information about the each of the TS packets, which information is indicated in table 4, to the log data generation unit 8.

On the other hand, the log data generation unit 8 generates a log consisting of first to fourth 4-byte words, those words being indicated in tables 5 to 8, with respect to each of the TS packets and based on the information supplied by the packet separation unit 2, the data filter unit 4 and the data search unit 5, and then, stores the log in a register within the log data generation unit. Thereafter, when the log satisfies predetermined conditions, the log data generation unit 8 outputs the log to the memory access unit 6. Although the predetermined conditions in the embodiment mean that any one of bits indicated in the following tables 9 and 10 is being "1," the conditions to be satisfied in the present invention are not limited to the above-descried conditions, and therefore, the conditions that can be employed in the present invention may flexibly be determined based on, for example, memory size of the SDRAM 7, reproduction rate in a fast-forward mode and reproduction rate in a rewinding mode. Furthermore, those trigger bits (the bits shown in tables 9 and 10) as means for outputting associated data to the memory access unit may be made not to be the trigger bits by using a CPU. Note that the bits indicated in table 9 constitute the second 4-byte word and the bits indicated in table 10 constitute the third and fourth 4-byte words.

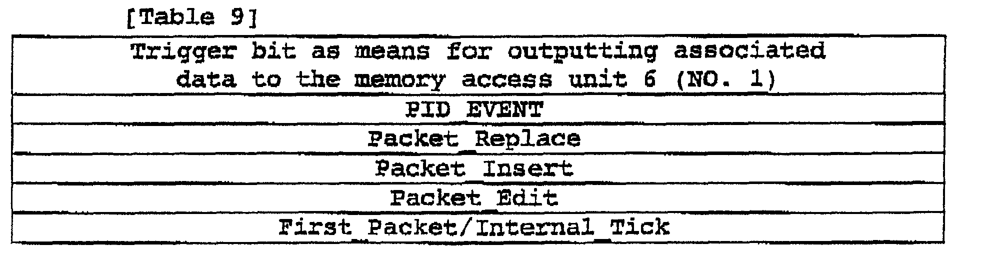

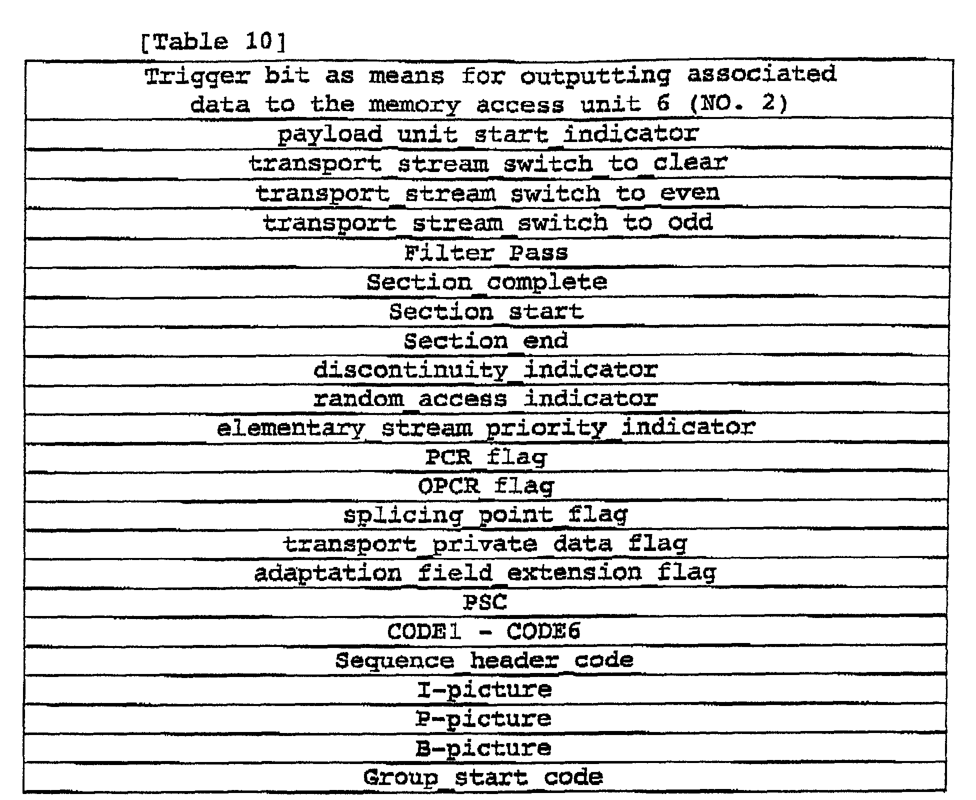

Additionally, the memory access unit 6 modifies the TS packet outputted from the data search unit 5 to generate a protocol for the SDRAM (storage unit) 7 while making the SDRAM 7 store the protocol and further, the log outputted from the log data generation unit 8. The SDRAM 7 is, for example, partitioned into one section for storing packet and another section for storing log, and digital data of a TS packet is stored in the section for storing packet and a log is stored in the section for storing log. Thereafter, when an amount of data accumulated in the SDRAM 7 reaches a certain value, the memory access unit 6 records the data accumulated in the SDRAM 7 in the HDD (recording medium) 9. Additionally, the memory access unit 6 makes the value of "First_Packet" equal to "1" in a case where the associated TS packet is a TS packet first recorded in the HDD.

When using the log generated and recorded through such operation of the recording system, it becomes possible to easily search a desired TS packet. For instance, the following operation becomes possible. That is, since the fourth 4-byte word of a log contain a record time, in a case where the record time corresponding to the broadcast program to be reproduced is apparent, instead of operation for searching the associated TS packet starting from the head portion of the TS packet, operation for searching only the fourth 4-byte word of the log allows the TS packet corresponding to the broadcast program to be reproduced to quickly be searched can be performed. Since a Record Time Stamp employed in the embodiment consists of 32-bits and is recorded at a frequency of 90 kHz, operation for recording associated data over about 13 hours can be performed. Since one packet consists of 188-bytes and a log employed in the present invention consists of 16-bytes, even in a case where logs are generated with respect to all of the TS packets recorded in the HDD 9, the burden on the CPU accompanied by search operation is extensively reduced to about 8.5%. In the embodiment, since a log is generated only when any one of the bits indicated in tables 9 and 10 becomes "1," the burden on the CPU accompanied by search operation is further reduced.

Moreover, reproductions in a fast-forward mode, a rewinding mode and a slow-forward mode under the MPEG-2 standard are performed selecting a necessary one of I-picture, P-picture and B-picture, all of which constitute a GOP. Even in a case of such reproduction, in the embodiment, the reproduction may be performed by searching a log in which the 29th bit (b28) counted starting from the least significant bit in increasing order of the corresponding number in the second 4-byte word is being "1" and therefore, the search operation can easily and quickly be performed. In general, since a GOP consists of a unit of 20 to 30 pictures, in a case where a log generated in accordance with a procedure employed in the present invention does not exist, operation for searching data consisting of 20 to 30 pictures in a packet unit to search a GOP is required and therefore, the burden on a CPU becomes extremely large.

Additionally, I-picture, P-picture and B-picture are available as MPEG picture and the P-picture and B-picture out of those three pictures are comprised of differential data between an associated picture and other pictures, and therefore, accident errors due to the differential data probably are accumulated in those two pictures. Accordingly, in the MPEG picture, operation for searching the I-picture to refresh a screen has to be performed appropriately. In such a case, if a log generated in accordance with a procedure employed in the present invention exists, only operation for searching a log in which the 26th bit (b25) counted starting from the least significant bit in increasing order of the corresponding number in the second 4-byte word is being "1" may be made, and therefore, the burden on a CPU becomes extremely small.

Even in a case where specific operation is performed, since a log contains a flag that is specified by an MPEG-2 standard transport stream, the flag necessary for performing the operation can be searched in accordance with the nature of the operation to be performed and therefore, the TS packet necessary for performing the operation can easily and quickly be searched.

In addition, in the conventional recording system for digital broadcasting, as described above, to perform normal reproduction, the data of TS packets other than the TS packets associated with the selected broadcast program also has to be recorded. The reason is as follows. Data transmission quantity per transport stream received from a satellite system, a ground station or the like is adjusted such that a buffer provided in a reception decoder to store video data neither overflows nor underflows. That is, in order to display normal images, it is required to perform reproduction keeping up with an input rate of a transport stream received from a satellite system, a ground station or the like. However, in a case where as shown in the conventional recording system for digital broadcasting, TS packets other than the TS packets associated with the selected broadcast program are not recorded, the reproduction rate cannot be made coinciding with the input rate. On the contrary, in a case where a log generated in accordance with a procedure employed in the present invention exists, since the log contains a record time, the reproduction rate can be made coinciding with the input rate by performing reproduction referring to the record time contained in the log. As a result, the capacity of the HDD 9 can advantageously be saved.

Additionally, in the present invention, since the SDRAM 7 is partitioned into sections for storing packet and for storing log, when going to search the content of log via the SDRAM 7, operation for searching only the data stored in the section for storing log is simply required to be performed and therefore, the log to be searched can be accessed more quickly than it could be accessed in a case where packet and log are stored in a mixed form in the SDRAM 7.

It should be noted that judgment to be performed in the data filter unit 4 as to whether it is necessary or unnecessary is optionally changed.

Furthermore, the storage unit and the recording medium employed in the present invention are not limited to an SDRAM and an HDD, respectively. Moreover, the log employed in the present invention is not limited to a log consisting of four 4-byte words.

AS described in detail so far, according to the present invention, allocating bits included in log data to indicate the feature of packets necessary for specific reproduction or the like makes it possible to search the packets necessary for specific reproduction or the like by only searching the log data and without an operation for searching a packet itself recorded in the recording medium. Although a TS packet in a transport stream consists of 188-bytes, the log data may be configured to only include such distinguishing bits and therefore, small size log data can be available. Accordingly, the burden on a CPU during search operation can be reduced and the entire operational usability of the system can be improved.

In addition, in a case where log data is made to include data indicative of the time as to generation of the log data, the time as to generation of the log data can be searched with respect to each packet and therefore, desired broadcast program can be searched in an extremely easy manner. Furthermore, performing reproduction referring to the time as to generation of the log data allows the reproduction rate to coincide with the input rate and therefore, it is no more required to record the packet provided only for keeping up with the reproduction rate in the recording medium, which recording operation is performed in the conventional recording system. As a result, the usability of capacity of the recording medium can be improved.

## Claims

1. A recording system for digital broadcasting comprising:
a recording medium (9) for recording a digital signal transmitted in a packet unit by a digital broadcasting; **characterized by** further comprising,
a log data generation unit (8) for generating log data containing previously specified bits out of a plurality of bits making up said digital signal in a packet unit.

2. The recording system for digital broadcasting according to claim 1, **characterized in that** said log data contains data indicative of a time when said log data has been generated.

3. The recording system for digital broadcasting according to one of claims 1 and 2 **characterized by** further comprising:
a storage unit (7) for storing said digital signal and said log data in a packet unit; and
a control unit (6) for making said recording medium record said digital signal stored in said storage unit.

4. The recording system for digital broadcasting according to claim 3, **characterized in that** said storage unit (7) is at least partitioned into a first section for storing said digital signal and a second section for storing said log data.

5. The recording system for digital broadcasting according to one of claims 3 and 4, **characterized in that** said log data generation unit (8) outputs said log data to the outside only in the event said log data satisfies previously determined conditions.

6. The recording system for digital broadcasting according to one of claims 3 through 5, **characterized in that** said control unit (6) is able to add data indicative of order of a packet corresponding to said log data to said log data, said order being counted since said control unit has begun recording packets.

7. The recording system for digital broadcasting according to one of claims 1 through 6 **characterized by** further comprising:
a first filter (2) for selectively extracting one or more packets associated with a broadcast program from a plurality of broadcast programs included in said digital signal while supplying bits necessary for generating said log data to said log data generation unit;
a second filter (4) for extracting packets satisfying predetermined conditions from packets having passed through said first filter while supplying bits necessary for generating said log data to said log data generation unit; and
a data search unit (5) for supplying bits necessary for generating said log data to said log data generation unit after inspecting contents of packets having passed through said second filter,
wherein only packets having passed through said second filter are recorded in said recording medium.

8. The recording system for digital broadcasting according to claim 7, **characterized in that** bits supplied from said data search unit to said log data generation unit contain at least one kind of bit selected from a group of bits consisting of a bit indicative of inclusion of I-picture, a bit indicative of inclusion of P-picture and a bit indicative of B-picture.

9. The recording system for digital broadcasting according to one of claims 1 through 8, **characterized in that** an operation for determining whether or not said log data is to be recorded in said recording medium with respect to each bit contained in said log data can be performed.

10. The recording system for digital broadcasting according to one of claims 1 through 9, **characterized in that** said log data contains at least one kind of bit selected from a group of bits consisting of a bit indicative of a value of PID included in a transport stream packet, said value being specified by MPEG-2 standard, a bit indicating said transport stream packet has been modified and a bit indicative of a channel of a digital signal.

11. The recording system for digital broadcasting according to one of claim 1 through 10, **characterized in that** said log data contains: a bit indicative of a state of "payload_unit_start_indicator" included in a packet header of a transport stream packet and specified by MPEG-2 standard; a bit indicating a state of change of a bit indicative of a state of "transport_scrambling_control" included in said packet header; and at least one kind of bit selected from a group of bits consisting of: a bit indicative of a state of "discontinuity_indicator"; a bit indicative of a state of "random_access_indicator"; a bit indicative of a state of ''elementary_stream_priority_indicator"; a bit indicative of a state of "PCR_flag"; a bit indicative of a state of "OPCR_flag"; a bit indicative of a state of "splicing_point_flag"; a bit indicative of a state of "transport_private_data_flag"; and a bit indicative of a state of "adaptation_field_extension_flag".

12. The recording system for digital broadcasting according to one of claims 1 through 11, **characterized in that** said log data contains at least one kind of bit selected from a group of bits consisting of: a bit indicative of a state of "PSC"; a bit indicative of a state of "Sequence_header_code"; a bit indicative of a state of "Group_start_code", all of said bits described so far in this claim being included in start code values specified by MPEG-2 standard; and a bit having another start code value.

13. The recording system for digital broadcasting according to one of claims 1 through 12, **characterized in that** said log data contains a bit indicating that said log data is generated at constant time intervals.
